Europäisches Patentamt

European Patent Office

Office européen des brevets

(19)

(11) Publication number: **0 164 201**
A1

## (12) EUROPEAN PATENT APPLICATION

(21) Application number: 85302838.9

(22) Date of filing: 23.04.85

(51) Int. Cl.⁴: **H 01 B 3/44,** C 08 F 259/08,
C 08 K 5/10

(30) Priority: 23.04.84 JP 82528/84
30.05.84 JP 112122/84

(43) Date of publication of application: 11.12.85
Bulletin 85/50

(84) Designated Contracting States: DE FR GB NL SE

(71) Applicant: SUMITOMO ELECTRIC INDUSTRIES
LIMITED, No. 15, Kitahama 5-chome Higashi-ku,
Osaka-shi Osaka 541 (JP)

(72) Inventor: Ueno, Keiji c/o Osaka Works of Sumitomo,
Electric Ind. Ltd. No. 1-3, Shimaya 1-chome,
Konahana-ku Osaka-shi Osaka (JP)

(74) Representative: Pearce, Anthony Richmond et al, Marks
& Clerk Alpha Tower Suffolk Street, Queensway
Birmingham B1 1TT (GB)

(54) Low-fuming flame-retardant electric wire and method of production thereof.

(57) Low-fuming flame-retardant electric wires are described (i) which comprises an electrically conductive metallic wire having thereon a coating layer of a resin composition comprising a tetrafluoroethylene/hexafluoropropylene copolymer and a polyfunctional monomer containg at least two unsaturated bonds which is cross-linked by irradiating with electron rays; or (ii) which comprises (1) at least one insulated core which comprises an electrically conductive metallic wire having an insulating coating thereon and (2) an outermost layer made of the above-described resin composition, which is cross-linked by irradiating with electron rays. Methods for manufacturing them are also disclosed. These electric wires are superior in flame retardance and produce less fumes when burned compared to conventional electric wires.

## LOW-FUMING FLAME-RETARDANT ELECTRIC WIRE
## AND METHOD OF PRODUCTION THEREOF

### FIELD OF THE INVENTION

The present invention relates to coated electric wires which are low-fuming and superior in flame retardance compared to conventional wires.

### BACKGROUND OF THE INVENTION

Electronic apparatuses such as computers and facsimiles have been increasingly used in recent years. Electric wires and cables used to connect these apparatuses or terminals therefore, for example, are called "plenum cables". In recent years such wires have been increasingly wired in ceiling installations. For this reason, it is required for these electric wires and cables not only to be flame retardant but also to stand rigorous regulations concerning fuming properties. In particular, they are required to be able to with stand the fuming property- and flame retardance-evaluation tests as determined by the Steiner Tunnel Method defined in the UL (Under writers Laboratories) Standards. In fact, so far only PVC (polyvinyl chloride) electric wires installed in a metallic pipe or, when such a metallic pipe is not used, electric wires coated with a fluorine resin have been able to stand with the above-described tests.

In connection with such fluorine resins, it is known that a tetrafluoroethylene/hexafluoropropylene copolymer (hereinafter abbreviated to "FEP"), polyvinylidene fluoride, a chlorotrifluoroethylene/ethylene copolymer, etc., provide good low fuming properties and flame retardance. It is generally thought that of the above fluorine resins, FEP is especially superior in fuming properties. However, it has been found that a polyethylene-insulated multicore cable with the outermost layer made of FEP fails to stand the Steiner Tunnel test with respect to fuming properties.

## SUMMARY OF THE INVENTION

An object of the present invention is to provide an electric wire which is superior in fuming properties and flame retardance, and is relatively inexpensive.

(i) The present invention relates to a low-fuming flame-retardant electric wire comprising an electrically conductive metallic wire having thereon a coating layer of a resin composition comprising a tetrafluoroethylene/hexafluoropropylene copolymer and a polyfunctional monomer containing at least two unsaturated bonds which is cross-linked by irradiating with electron rays.

(ii) Furthermore, the present invention relates to a low-fuming flame-retardant electric wire comprising (1) at least one electrically insulated core comprising an electrically conductive metallic wire having an electrically insulating coating thereon and (2) an outermost layer made of a resin composition comprising a tetrafluoroethylene/hexafluoropropylene copolymer and a polyfunctional monomer containing at least two unsaturated bonds which is cross-linked by irradiating with electron rays.

## DETAILED DESCRIPTION OF THE INVENTION

In the embodiment (i) of the present invention, when the eleectric wire consists a metallic wire and the coating layer of the resin composition, the coating layer acts as an electriclly insulating coating.

The reason why FEP is used in the present invention is that among fluorine resins that are relatively superior in low-fuming properties, FEP is especially superior in having low-fuming properties.

As polyfunctional monomers, those monomers having at least three functional groups are preferably used. When a polyfunctional monomer selected from the group consisting of triallyl cyanurate, triallyl isocyanurate, trimethylolpropane trimethacrylate, trimethylolpropane triacrylate, trimethylolhexane trimethacrylate, and trimethylolhexane triacrylate is used, the fevorable effects of electron ray-irradiation are very significant. When at least one of triallyl cyanurate and triallyl isocyanurate is used as a polyfunctional monomer a coating especially excellent in heat resistance and mechanical strength can be obtained. This coating can with shand a heat shock test at a temperature of 300°C.

The inventors have found that the electric wire of the present invention can with stand the Steiner Tunnel test. Such a result was unexpected because the FEP resin per se and the FEP resin composition of the present invention which is irradiated with electron rays have the same Dm (maximum smoke density) measured by using a U.S. NBS (National Bureau of Standards) smoke density chamber. In both the FEP resin and the FEP resin composition, Dm was 50 or less in flaming and non-flaming tests. Inventors conducted tests using NBS smoke density chamber manufactured by American Instrument Co. and according on the manual attached to the chamber disclosed in a catalogue (1973).

The Steiner Tunnel test uses an apparatus with a tray provided in a horizontal furnace in its lengthwise direction so that the horizontal tunnel test as defined in ASTM E-84 can be carried out. One end of a cable sample is ignited with a burner. After 20 minutes, the distance for which the cable burns is measured. The regulated maximum burning distance is 5 ft (152.4 cm). In addition, the amount of smoke is measured by the use of a photo-electric tube. It is necessary that log Io/I=0.5 or less (wherein Io is an initial light transmittance, and I is light transmittance after 20 minute of burning).

In the method for determining Dm, a test sample resin of a fixed amount is burned in a chamber and the amount of smoke is measured using a phototube. The Dm is a product of the logalithm of the ratio of light transmittances in the chamber prior to burning to that after burning, and a specific coefficient determined according on the test conditions.

Commercially available FEP resins in which the molar ratio is from about 7/3 to 3/7 can be preferably used. An FEP having a melt index (372°C-5 Kg)of from 0.75 to 8.5 is preferably used in the present invention. The above-described polyfunctional monomer is added to the FEP resin and melt mixed.

The resulting mixture is usually coated on an insulated electric wire by a melt extrusion method and then irradiated with electron rays.

The thickness of the FEP resin coating of the present invention is not limited so long as the layer has s sufficient mechanical strength desired according on the intended use of the wire. Usually, the thickness is about 0.1 mm or more; however, a layer having a thickness of less than 0.1 mm, and preferably not less than 0.05 mm, can also be provided.

The amount of the polyfunctional monomer added is preferably from 0.1 to 20 parts by weight, and more preferably from 0.2 to 10 parts by weight, per 100 parts by weight of the FEP resin. If the amount of the polyfunctional monomer added is less than 0.1 part by weight, the electron ray-irradiation effect can be obtained only insufficiently. On the other hand, if the amount of the polyfunctional monomer added is in excess of 20 parts by weight, it liable to be difficult to dissolve the polyfunctional monomer in the FEP resin. As a result, in extrusion coating, the amount of the composition extruded varies. The amount of electron rays absorbed is preferably from 1 to less than 30 Mrad, and more preferably from 3 to 25 Mrad. If the amount of electron rays absorbed is 30 Mrad or more, the FEP resin becomes liable to drip during the Steiner Tunnel test and the amount of smoke is increased. If the amount of electron rays absorbed is less than 1 Mrad, the FEP resin is liable to drip, consequently, it will be difficult to maintain the shape of the FEP resin coating layer on the insulated core(s). The above-described two ranges for the amount of electron rays absorbed are also preferable and more preferable, respectively, for obtaining a coating which can with stand the heat shock test.

As the electrically conductive metallic wire, known wires such as a copper wire, a tin-coated copper wire, nickel-caoted copper wire, etc., can be used.

In the preparation of an electic wire of the above-described embodiment (ii) as the insulating coating layer, known polymers as an insulating coating such as polyethylene can be used, and the resin composition of the present invention can also be used.

In the embodiment (ii) of the present invention the number of the insulated core may be one or more. When two or more of insulated cores are used, the cores are usually wound in one bundle with a tape. The tape is usually comprised of a resin which does not melt by heating. A polyimide tape which does not melt by heating is preferably used for this purpose.

The present invention is described in greater detail with reference to the following examples.

## EXAMPLE 1

A multicore cable containing four FEP-insulated cores and having 1.9 mm in outer diameter as produced by extrusion coating an FEP resin (molar ratio: about 1/1; FEP #100 produced by Du Pont) on a metal conductor (tin-coated copper) of AWG (American Wire Gage) 22 (0.64 $\phi$) and eight polyethylene-insulated cores using the same metal conductor as described above (thickness of the polyethylene layer: 0.63 mm) was produced by winding with a polyimide tape (Kapton, a trade mark for a product produced by Du Pont) having a thickness of 25 μm and a width of 30 mm at 1/2 wrap winding. a resin composition comprising the FEP resin the same as described above and triallyl cyanurate in the amount of 5 parts by weight per 100 parts by weight of the FEP resin was extrusion coated on the polyimide tape layer as the outermost layer in a thickness of 1.2 mm. The outermost layer was irradiated with 15 Mrad of electron rays by the use of an electron ray accelerator at an acceleration voltage of 2 Mev. This multicore cable was subjected to the Steiner Tunnel test according to the UL standards. The burning distance was 3.5 ft (106.68 cm) and the fuming property was 0.46; it was found that the multicore cable was satisfactory in both burning distance and its the low-fuming property. The fuming properties of the FEP resin composition used in the preparation of the outermost layer was measured by the use of an NBS smoke density chamber with the result that Dm=27 in flaming.

<div align="center">

EXAMPLE 2

</div>

A resin composition comprising the same FEP resin as used in Example 1 and triallyl isocyanurate added in the amount of 5 parts by weight per 100 parts by weight of the FEP resin was extrusion coated in a thickness of 1.2 mm as the outermost layer on a 12-core cable of the same structure as in Example 1 and then irradiated with 15 Mrad of electron rays by the use of a 2 Mev electron accelerator. Thereafter, in the same manner as in Example 1, the Steiner Tunnel test was conducted and also the fuming properties of the FEP resin composition were measured using the NBS smoke density chamber. In the Steiner Tunnel test, the burning distance was 4.0 ft (121.92 cm) and the fuming property was 0.5; it was satisfactory in both the burning distance and the fuming property as in Example 1. In the measurement of the fuming properties using the NBS smoke chamber, Dm was 25 in flaming.

<div align="center">EXAMPLE 3</div>

A resin composition comprising the same FEP resin as used in Example 1 and trimethylolpropane trimethacrylate added in the amount of 10 parts by weight per 100 parts by weight of the FEP resin was extrusion coated in a thickness of 1.2 mm as the outermost layer on a 12-core cable of the same structure as in Example 1 and then irradiated with 20 Mrad of electron rays by the use of a 2 Mev electron accelerator. Thereafter, in the same manner as in Example 1, the Steiner Tunnel test was conducted and also the fuming properties of the FEP resin composition were measured using the NBS smoke density chamber. In the Steiner Tunnel test, the burning distance was 3.8 ft (115.82 cm) and the fuming property was 0.5; it was satisfactory in both the burning distance and the fuming properties. In the measurement of the fuming properties using the NBS smoke chamber, Dm was 26.5 in flaming.

0164201

/10

Example 4

On to a metal conductor comoprising 19 metal wires of nickel-coated copper having an outer diameter of 1.0 mm a coating of a resin composition of 100 parts by weight of an FEP resin (TEFLON, a trade mark for a product produced by Du Pont) and 5 parts by wegiht of triallyl isocyanurate was provided by extrusion coating in a thickness of 0.2 mm as an electric insulating layer. The layer was irradiated with 5 Mrad electron rays using an electron ray accelarator at an acceleration voltage of 2 MeV to cross-link the resin composition.

The thus obtained electric wire was wound on a metal bar having 1.27 cm of diameter for 3 rounds, and at each of the two ends of the wire 675 g of load was hung. The thus loaded wire was kept in a thermostat bath of 300°C for 7hours. After recovering and cooling the wire, the wire was subjected to a voltage resistance test using AC 2500 V for 1 minute in water and it was observed that the wire can with stand it.

Example 5

The same experiment as in Example 4 was conducted except that 3 weight parts of triallyl isocyanurate was used instead of trially cyanurate and the irradiation amount was 10 Mrad. It was observed that the thus prepared wire can with stand the heat shock test as described in Exmple 4.

- 10 -

## COMPARATIVE EXAMPLE 1

The same FEP resin as used in Example 1 was extrusion coated in a thickness of 1.2 mm as the outermost layer on a 12-core cable of the same structure as in Example 1. This multi-core cable was subjected to the Steiner Tunnel test and the amount of smoke from the FEP resin was measured by the use of the NBS smoke density chamber. In the Steiner Tunnel test, the burning distance met the standards requirement (burning distance; 4.0 ft (121.92 cm)), but the fuming properties were below the standards (fuming property: 1.17). In connection with the fuming properties as measured using the NBS smoke chamber, Dm was 25.5 in flaming.

It can be seen from the above results that the cable of the preset invention particularly meets the standards requirement.

## COMPARATIVE EXAMPLE 2

A resin composition comprising an ethylene/tetrafloroethylene copolymer (ETFE) and triallyl cyanurate added in the amount of 5 parts by weight per 100 parts by weight of the ETFE was extrusion coated in a thickness of 1.2 mm as the outermost layer on a 12-core cable of the same structure as in Example 1 and then irradiated with 15 Mrad of electron rays by the use of 2 Mev electron accelerator. Thereafter, the Steiner Tunnel test was conducted and the amount of smoke was measured using the NBS smoke density chamber. In the Steiner Tunnel test, the burning distance met the standards requirement (burning distance: 3.5 ft (106.68 cm)), but the fuming property was below the standards (fuming property: 1.53). In the measurement of the fuming properties using the NBS smoke density chamber, Dm was 110 in flaming.

Thus, it can be seen that the use of tetrafluoroethylene/hexafluoropropylene in accordance with the present invention is necessary to meet the standards requirement.

While the invention has been described in detail and with reference to specific embodiments thereof, it will be apparent to one skilled in the art that various changes and modifications can be made therein without departing from the spirit and the scope thereof.

CLAIMS

1. A low-fuming flame-retardant electric wire comprising an electrically conductive metallic wire having thereon a coating layer of a resin composition comprising a tetrafluoroethylene/hexafluoropropylene copolymer and a polyfunctional monomer containing at least two unsaturated bonds which is cross-linked by irradiating with electron rays.

2. An electric wire as in claim 1, wherein the amount of the polyfunctional monomer added is from 0.1 to 20 parts by weight per 100 parts by weight of the copolymer.

3. An electric wire as in claim 1, wherein the amount of electron rays absorbed is from 1 to 30 Mrad.

4. An electric wire as in claim 1, wherein the amount of electron rays absorbed is from 3 to 25 Mrad.

5. An electric wire as in claim 1, wherein said polyfunctional monomer is selected from the group consisting of trially cyanurate, triallyl isocyanurate, trimethylolpropane trimethacrylate, trimethylolpropane triacrylate, trimethylolhexane trimethacrylate, and trimethylolhexane triacrylate.

6. An electric wire as in claim 1, wherein the molar ratio of tetrafluoroethylene to hexafluoropropylene in said copolymer is from 7/3 to 3/7.

7. An electric wire as in claim 1, wherein said metallic wire is selected from the group consisting of copper wire, tin-coated copper wire, and nickel-coated copper wire.

8. An electric wire as in claim 1, wherein the coating layer has a thickness of 0.05 mm or more.

9. A method for producing a low-fuming flame-retardant electric wire, which comprises coating a electrically conductive metallic wire with a composition comprising a tetrafluoroethylene/hexafluoropropylene copolymer and a polyfunctional monomer containing at least two unsaturated bonds by a melt extrusion method, and irradiating the extrusion coated wire with electron ray.

10. A low-fuming flame-retardant electric wire comprising (1) at least one insulated core which comprises an electrically conductive metallic wire having an insulating coating thereon and (2) an outermost layer made of a resin composition comprising a tetrafluoroethylene/hexafluoropropylene copolymer and a polyfunctional monomer containing at least two unsaturated bonds which is corss-linked by irradiating with electron rays.

11. An electric wire as in claim 10, wherein the amount of the polyfunctional monomer added is from 0.1 to 20 parts by weight per 100 parts by weight of the copolymer.

12. An electric wire as in claim 10, wherein the amount of electron rays absorbed is from 1 to 30 Mrad.

13. An electric wire as in claim 10, wherein the amount of electron rays absorbed is from 3 to 25 Mrad.

14. An electric wire as in claim 10, wherein said polyfunctional monomer is selected from the group consisting of trially cyanurate, triallyl isocyanurate, trimethylolpropane trimethacrylate, trimethylolpropane triacrylate, trimethylolhexane trimethacrylate, and trimethylolhexane triacrylate.

15. An electric wire as in claim 10, wherein the molar ratio of tetrafluoroethylene to hexafluoropropylene in said copolymer is from 7/3 to 3/7.

16. An electric wire as in claim 10, wherein said insulating coating comprises of polyethylene.

17. An electric wire as in claim 10, wherein said metallic wire is selected from the group consisting of copper wire, tin-coated copper wire, and nickel-coated copper wire.

18. An electric wire as in claim 10, wherein the outermost layer has a thickness of 0.05 mm or more.

19. A method for producing a low-fuming flame-retardant electric wire, which comprises coating at least one core comprising wire having an electrically insulating coating thereon with a composition comprising a tetrafluoroethylene/hexafluoropropylene copolymer and a polyfunctional monomer containing at least two unsaturated bonds by a melt extrusion method, and irradiating the extrusion coated wire with electron ray.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 194 728 (INTERNATIONAL STANDARD ELECTRIC CORP.) * Pages 15-16, claims * | 1-4 | H 01 B 3/44 C 08 F 259/08 C 08 K 5/10 |
| X | US-A-3 894 118 (ELIHU J. ARONOFF et al.) * Columns 8-10, claims; column 3, lines 8-10 * | 1-4 | |
| X | US-A-4 353 961 (A.J. GOTCHER et al.) * Column 2, line 63 - column 3, line 6; columns 12-14, claims * | 1-19 | |
| X | US-A-3 995 091 (K.S. DHAMI) * Columns 6-8, claims * | 1-4 | |
| X | US-A-3 985 716 (K.S. DHAMI) * Columns 6-8, claims * | 1-4 | **TECHNICAL FIELDS SEARCHED (Int. Cl.4)** |
| X | US-A-4 051 003 (E.J. ARONOFF et al.) * Columns 8-10, claims * | 1-4 | H 01 B C 08 F |
| X | US-A-4 078 114 (E.J. ARONOFF et al.) * Column 8, claims * | 1-4 | |

The present search report has been drawn up for all claims

| Place of search | Date of completion of the search | Examiner |
|---|---|---|
| THE HAGUE | 14-08-1985 | STIENON P.M.E. |